# EUROPEAN PATENT APPLICATION

(11) **EP 3 922 959 A1**
(43) Date of publication of application: **15.12.2021**
(21) Application number: 21177680.2
(22) Date of filing: 04.06.2021
(51) Int. Cl.: G01F 1/66, G01K 17/06

(54) **ULTRASONIC MEASUREMENT DEVICE, PARTICULARLY FOR THE MEASUREMENT OF WATER AND/OR CALORIES CONSUMPTION**

(30) Priority: 08.06.2020 IT 202000013537
(71) Applicant: Maddalena S.p.A., 33040 Povoletto (UD) (IT)
(72) Inventor: CIAPPINA, Fabio Massimo, 33084 Cordenons (PN) (IT); MADDALENA, Franco, 33100 Udine (IT)
(74) Representative: Frare, Paolo

(57) **Abstract**

The present invention relates to an ultrasonic measuring device (1) of the water and/or of calories consumption, comprising:
- a tubular body (2) wherein a duct (7) configured to the flow of water therein is defined,
- means of generation (13, 14), configured to generate an ultrasonic wave that propagates within the duct (7),
- means of reception (13, 14) suitable for receiving an ultrasonic wave generated by the means of generation (13, 14),
- reflective means (22), arranged within said duct (7), configured to intercept an ultrasonic wave generated by the means of generation (13, 14) and divert it toward the means of reception (13, 14),
in which the reflective means (22) include:
- a reflective body (17) provided with a reflective front face (18), configured to receive and reflect an ultrasonic wave, and a rear face (19), positioned posteriorly to the reflective front face (19) so that it is not hit by an ultrasonic wave incident on said reflective front face (18), the reflective front face (18) and the rear face (19) being connected to each other by a side wall (20),
- a support (21), fixed to the rear face (19) of the reflective body (17) and configured to keep said reflective body (17) in a predetermined position within the duct (7), wherein the ultrasonic measuring device (1) comprises one or more appendices (22a, 22b, 22c, 22d), protruding from the rear face (19) of the reflective body (17) toward the support (21) and inserted within the latter, whose shape and/or position are such that the set of said one or more appendices (22a, 22b, 22c, 22d) inserted in the support (21) opposes the removal of the reflective body (17) from the support (21) along three directions (x, y, z) two by two orthogonal to each other.

## Description

The present invention relates to an ultrasonic measuring device, particularly for measuring water and/or calories consumption.

Today, ultrasonic measuring devices for measuring water consumption by a utility, commonly called "meters", are known comprising a hollow tubular element within which the water whose consumption (i.e. litres passed through the device) is to be measured is passed.

Such known type ultrasonic meters typically comprise a pair of ultrasonic transducers (i.e., capable of generating and receiving an ultrasonic wave), and special reflective elements arranged within the hollow tubular body and configured to intercept and reflect the ultrasonic wave, so as to allow it to propagate from one ultrasonic transducer to the other, and vice versa, as it passes within the water flowing in the hollow tubular body.

The time it takes for the ultrasonic wave to pass from one ultrasonic transducer to the other is influenced by the direction and speed of the water through which the ultrasonic wave propagates; by calculating the difference between the times required for an ultrasonic wave to pass from one ultrasonic transducer to the other in the two directions, a logic unit in these known type meters calculates the speed of the water, and from this, since the section of the hollow tubular element is a known parameter, the flow rate (corresponding to the speed multiplied by the passage section), and the water consumption (i.e. flow rate multiplied by the time).

In some cases, such known type measuring devices are also provided with one or more temperature probes to measure the temperature of the water, in which case they allow the consumption of calories carried by that water to be derived; such known devices are generally referred to as "heat meters".

The reflective elements of such known type measuring devices typically comprise metallic discs having a reflective front face, flat or having a desired bending, configured to receive and reflect an ultrasonic wave, and a support for fixing the disc at a predetermined position within the hollow tubular element.

Solutions are known in which the disc is embedded in the support by means of appendices of the latter which embrace the disc laterally and overlap the reflective front face of the disc, thus preventing the removal thereof from the support.

However, these known solutions have the disadvantage that the appendices of the support, by partially overlapping the reflective front face of the disc to keep it bound to the support, reduce the surface of this reflective front face exposed to the ultrasonic waves and therefore able to reflect them.

Furthermore, the appendices of the support generate eddies or other turbulences in the flow of water passing through the hollow tubular body, which can affect the accuracy of the measurement.

In addition, the appendices can trap and hold, close to the disc, any dirt particles or foreign bodies that may be carried by the water, which can create turbulences that compromise the accuracy of the measurement and/or overlap with the reflective front face, reducing the surface exposed to the ultrasonic waves and therefore able to reflect them.

Furthermore, the appendices also surround the disc laterally, reducing the surface available for the passage of water comprised between the edge of the disc and the inner surface of the hollow tubular element, with a consequent increase in pressure losses in the flow of water, and an increased risk of entrapment of any foreign bodies present in the same.

Other known solutions provide for overmoulding the support to the disc in such a way as to wrap the same around the perimeter like a frame; however, even these known solutions reduce the surface available for the passage of water comprised between the edge of the disc and the inner surface of the hollow tubular element, with the consequent problems mentioned above that this entails.

The main aim of the present invention is to overcome the above-mentioned drawbacks, and in particular to obtain an ultrasonic measuring device, particularly of the quantity of water that has passed through it and/or of the calories carried by said water, which allows an effective and reliable measurement, while keeping the pressure losses limited.

In the context of this aim, another object of the invention is to obtain an ultrasonic measuring device, particularly of the quantity of water that has passed through it and/or of the calories carried by said water, which can be manufactured relatively easily, and whose production costs are relatively low.

These and other objects according to the present invention are achieved by an ultrasonic measuring device comprising:
- a tubular body wherein a duct configured to the flow of water therein is defined,
- means of generation, configured to generate an ultrasonic wave that propagates within said duct,
- means of reception suitable for receiving an ultrasonic wave generated by the means of generation,
- reflective means, arranged within the duct, configured to intercept an ultrasonic wave generated by the means of generation and divert it toward the means of reception,
wherein the reflective means include:
- a reflective body provided with a reflective front face, configured to receive and reflect an ultrasonic wave, and a rear face, positioned posteriorly to the reflective front face so that it is not hit by an ultrasonic wave incident on the reflective front face, the reflective front face and the rear face being connected to each other by a side wall,
- a support, fixed to the rear face of the reflective body and configured to keep the reflective body in a predetermined position within the duct,
wherein the ultrasonic measuring device comprises one or more appendices, protruding from the rear face of the reflective body toward the support and inserted within the latter, whose shape and/or position are such that the set of said one or more appendices inserted in the support opposes the removal of the reflective body from the support along three directions two by two orthogonal to each other.

It is underlined that three directions two by two orthogonal to each other define de facto the whole space, and that any displacement in space can be decomposed in the sum of three displacements (one or more of which can also be null) in these three directions; to oppose the removal of the reflective body from the support along three directions two by two orthogonal to each other means therefore to oppose this removal in any direction. It is also underlined that if the one or more appendices comprise only a single appendix, the set of said one or more appendices will comprise only this single appendix, in which case it is the shape and/or position thereof that opposes the removal of the reflective body from the support along three directions two by two orthogonal to each other.

In the case where the one or more appendices instead comprise a plurality (thus at least two) of appendices, it is possible that one of said appendices opposes the removal of the reflective body from the support along three directions two by two orthogonal to each other, or it is possible for example, that one of these appendices may oppose the removal of the reflective body from the support along two directions orthogonal to each other, and another appendix opposes the removal of the reflective body from the support along a third direction orthogonal to the first ones; alternatively, it is possible, if there are at least three appendices, for them to oppose the removal of the reflective body from the support, each along a different direction among three directions two by two orthogonal to each other.

Other advantageous features of the invention are reported in the dependent claims.

The features and advantages of the present invention will be more apparent from the following description, which is to be understood as exemplifying and not limiting, with reference to the appended schematic drawings, wherein:
- Figure 1 is a perspective view of an ultrasonic measuring device according to the invention;
- Figure 2 is a side view of the device of Figure 1;
- Figure 3 is a front view of the device of Figure 1;
- Figure 4 is a side view of the reflective elements of the device illustrated in the preceding figures, accommodated in the tubular body, the latter being illustrated in a section operated according to the plane IV-IV of Figure 3;
- Figure 5 is an enlarged detail of Figure 4;
- Figure 6 is a section of the device referred to in the previous figures, operated according to the plane IV-IV of Figure 3;
- Figure 7 is an enlarged detail of Figure 6;
- Figure 8 is a plan view of the reflective elements of the device illustrated in the previous figures, accommodated in the tubular body, the latter being illustrated in a section operated according to the plane VIII-VIII of Figure 2;
- Figure 9 is a view similar to that of Figure 4, with some dimensions indicated;
- Figure 10 is a table showing some advantageous intervals of values that the dimensions indicated in Figure 9 can take on;
- Figure 11 is a view similar to that of Figure 9, with some preferred values of some dimensions indicated;
- Figure 12 is a perspective view of an example of reflective means according to the invention;
- Figure 13 is a perspective view of a reflective body of the reflective means of Figure 12;
- Figure 14 is a perspective view of a support of the reflective means of Figure 12;
- Figure 15 shows a side view of the reflective means of Figure 12;
- Figure 16 is a front view of the reflective means of Figure 12;
- Figure 17 is a plan view of the reflective means of Figure 12;
- Figure 18 is a side view of the reflective body of Figure 13;
- Figure 19 is a front view of the reflective body of Figure 13;
- Figure 20 is a plan view of the reflective body of Figure 13;
- Figure 21 is a side view of the support of Figure 13;
- Figure 22 is a front view of the support of Figure 13;
- Figure 23 is a plan view of the support of Figure 13;
- Figure 24 is a side view of a further advantageous embodiment of a reflective body according to the invention;
- Figure 25 is a side view of the reflective body of Figure 24, fixed to a support according to the invention, the latter being represented in transparency;
- Figure 26 is a side view of a further advantageous embodiment of a reflective body according to the invention;
- Figure 27 is a side view of the reflective body of Figure 26, fixed to a support according to the invention, the latter being represented in transparency.

In the attached figures, an ultrasonic measuring device has been indicated by number 1, particularly for measuring water and/or calories consumption.

The ultrasonic measuring device 1 comprises a tubular body 2 configured to the flow of water therein. Advantageously, the tubular body 2 may be made of a metal, such as for example brass, or stainless steel, or of a plastic material, such as polyamide 66 (PA66), polyparaphenylene sulfide (PPS), or another plastic material (or combination of several plastics), preferably loaded with glass fibre, more preferably up to a maximum of 60% by weight.

Advantageously, the tubular body 2 has, at one first end 3 thereof, an inlet opening 4, through which water can enter the tubular body 2.

Preferably, the inlet opening 4 has a circular shape, and a diameter De comprised between 10-50 mm, preferably equal to 16.50 mm.

Advantageously, the inlet opening 4 may be connected to an infeed pipe, not shown, of a hydraulic system, also not shown, within which water flows, so as to bring this water inside the tubular body 2.

Advantageously, the inlet opening 4 may be connected to said infeed pipe by means of a first ferrule, not shown which connects the first end 3 of the tubular body 2 with one end of said infeed pipe; preferably said first ferrule is internally threaded, and is configured to couple by screwing with the outer surface 3a of the first end 3, which in this case is advantageously externally counter-threaded to said first ferrule.

Advantageously, the tubular body 2 has, at one second end 5 thereof, an outlet opening 6, through which water can flow out of the tubular body 2.

Preferably, the outlet opening 6 has a circular shape, and a diameter comprised between 10-50 mm, preferably equal to 16.50 mm. Advantageously, the outlet opening 6 may be connected to an outfeed pipe, not shown, of a hydraulic system, also not shown, within which the water flowing out of the tubular body 2 is infeed. Advantageously, the outlet opening 6 may be connected to said outfeed tube by means of a second ferrule, not shown which connects the second end 5 of the tubular body 2 with one end of said outfeed tube; preferably said second ferrule is internally threaded, and is configured to couple by screwing with the outer surface 5a of the second end 5, which in this case is advantageously externally counter-threaded to said second ferrule. Advantageously, like in the embodiment shown in the attached figures, the outlet opening 6 is identical to the inlet opening 4.

Advantageously, like in the embodiment shown in the attached figures, the outlet opening 6 and the inlet opening 4 lie on two planes parallel to each other.

The tubular body 2 is crossed longitudinally by a duct 7, which connects the inlet opening 4 and the outlet opening 6 between them, allowing water to flow between them.

Advantageously, this duct 7 has an elongated shape, and a middle longitudinal axis AL.

Advantageously, the inlet opening 4 and the outlet opening 6 are configured such that their centres lie on the middle longitudinal axis AL of the duct 7. Preferably, like in the embodiment example shown in the enclosed figures, the outlet opening 6 and the inlet opening 4 both have a circular shape, have the same diameter, lie on two planes parallel to each other and perpendicular to the middle longitudinal axis AL of the duct 7, and are aligned with each other so that the centre of both lie on the middle longitudinal axis AL. Advantageously, the duct 7 comprises, starting from the inlet opening 4, a first section 8, preferably substantially cylindrical, the base of which advantageously corresponds to the inlet opening 4, and advantageously coaxial to the middle longitudinal axis AL.

The first section 8 has advantageously, in the direction of the middle longitudinal axis AL, a length L1 comprised between 30-220 mm, preferably equal to 35 mm. Advantageously, the duct 7 comprises a second section 9, advantageously substantially truncated conical, coaxial to the middle longitudinal axis AL and connected with its major base 9a to the first section 8; advantageously, the major base 9a of the second section 9 coincides with the base of the first section 8 facing away from the access opening 4; advantageously, the major base 9a therefore has a diameter equal to the diameter De of the access opening 4, which is comprised between 10-50 mm, preferably equal to 16.50 mm.

Advantageously, the second section 9 has a minor base 9b, facing away from the first section 8, which has a diameter Di advantageously comprised between 5-45 mm, preferably equal to 11 mm.

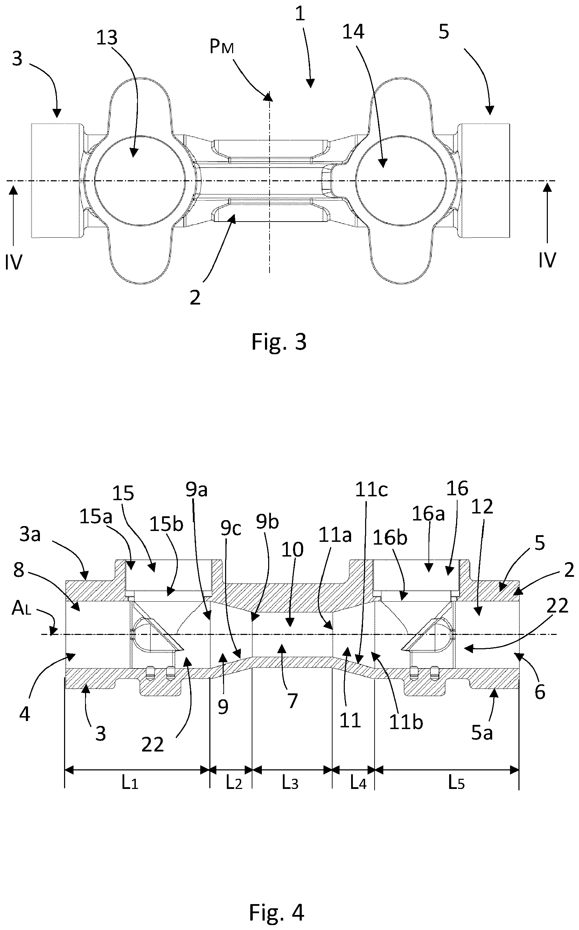

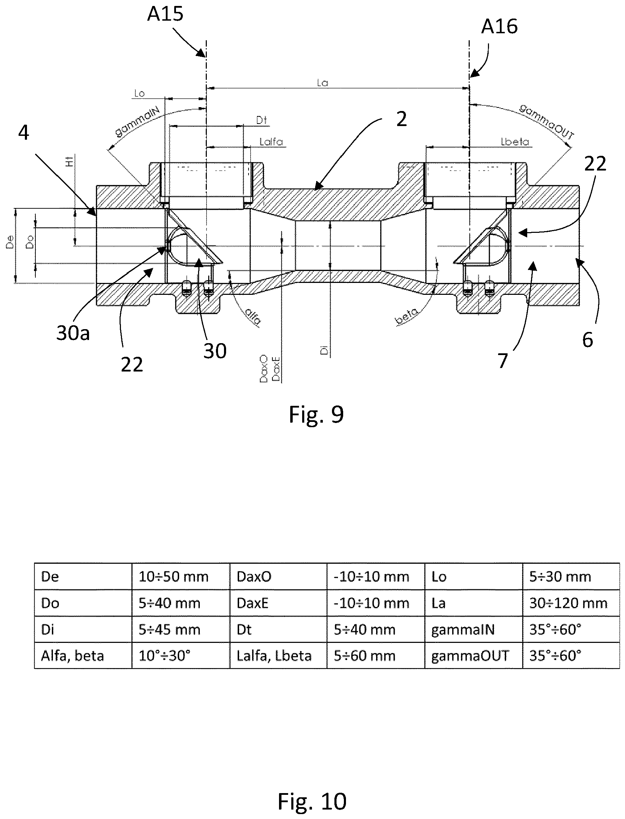

Advantageously, the truncated conical side surface 9c of the second section 9 results, in a section operated according to a plane passing through the middle longitudinal axis AL, such as for example the plane IV-IV of Figure 3, inclined with respect to the middle longitudinal axis AL, by an angle Alpha (indicated for example in Figure 9) preferably comprised between 10°-30°, more preferably equal to 15°.

The second section 9 has advantageously in the direction of the middle longitudinal axis AL, a length L2 comprised between 5-20 mm, preferably equal to 10.25 mm. Advantageously, the duct 7 comprises a third section 10, advantageously substantially cylindrical, coaxial to the middle longitudinal axis AL and connected with a first base thereof to the minor base 9b of the second section 9; advantageously, said first base of the third section 10 coincides with the minor base 9b of the second section 9 and thus has a diameter equal to the diameter Di of said minor base 9b, thus advantageously resulting comprised between 5-45 mm, preferably equal to 11 mm. The third section 10 advantageously has in the direction of the middle longitudinal axis AL, a length L3 comprised between 5-40 mm, preferably equal to 19.5 mm.

Advantageously, the duct 7 comprises a fourth section 11, advantageously substantially truncated conical, coaxial to the middle longitudinal axis AL and connected with the minor base 11a thereof to the third section 10; advantageously, the minor base 11a of the fourth section 11 coincides with a second base of the third section 10 facing away from the access opening 4. Advantageously, the minor base 11a therefore has a diameter equal to the diameter Di of the minor base 9b of the second section 9, and to the diameter of the third section 10, being advantageously comprised between 5-45 mm, preferably equal to 11 mm.

Advantageously, the fourth section 11 has a major base 11b, facing away from the third section 10, which has a diameter advantageously equal to the diameter De of the inlet opening 4, and thus advantageously comprised between 10-50 mm, preferably equal to 16.50 mm.

Advantageously, the truncated conical side surface 11c of the fourth section 11 results, in a section operated according to a plane passing through the middle longitudinal axis AL, such as for example the plane IV-IV of Figure 3, inclined with respect to the middle longitudinal axis AL, by an angle Beta (indicated for example in Figure 9) preferably comprised between 10°-30°, more preferably equal to 15°.

The fourth portion 11 has advantageously, in the direction of the middle longitudinal axis AL, a length L4 comprised between 5-20 mm, preferably equal to 10.25 mm.

Advantageously, the duct 7 comprises a fifth section 12, advantageously substantially cylindrical, coaxial to the middle longitudinal axis AL and connected with a base thereof to the major base 11b of the fourth section 11; advantageously, a first base of the fifth section 12 coincides with the major base 11b of the fourth section 11 and thus has a diameter equal to the diameter of said major base 11b, which preferably is equal to the diameter of the access opening 4, thus advantageously being comprised between 10-50 mm, preferably equal to 16.50 mm.

Advantageously, a second base of the fifth section 12 coincides with the outlet opening 6.

The fifth portion 12 has advantageously, in the direction of the middle longitudinal axis AL, a length L5 comprised between 30-220 mm, preferably equal to 35 mm. Advantageously, the ultrasonic measuring device 1 comprises means of generation, configured to generate an ultrasonic wave that propagates within the duct 7, means of reception, suitable for receiving an ultrasonic wave generated by said means of generation, and reflective means, arranged within the duct 7 and configured to intercept an ultrasonic wave generated by the means of generation and divert it towards the means of reception. In a preferred embodiment, said means of generation comprise a first ultrasonic transducer 13 and a second ultrasonic transducer 14 (schematically represented in the attached figures), each configured to generate an ultrasonic wave that propagates within the duct 7; in this case, the means of reception comprise the same first ultrasonic transducer 13 and second ultrasonic transducer 14, which are configured, in addition to generating an ultrasonic wave, also to receive an ultrasonic wave. In particular, the second ultrasonic transducer 14 is configured to receive an ultrasonic wave generated by the first ultrasonic transducer 13, and the first ultrasonic transducer 13 is configured to receive an ultrasonic wave generated by the second ultrasonic transducer 14.

In an advantageous embodiment, the first ultrasonic transducer 13 and the second ultrasonic transducer 14 are positioned and fixed, respectively, within a first through seat 15 and a second through seat 16, obtained on the side surface of the tubular body 2, and communicating with the duct 7 obtained in the same. Advantageously, the first through seat 15 and the second through seat 16 develop according to a respective middle longitudinal axis (indicated in Figure 9 as "A15" and "A16" respectively) perpendicular to the middle longitudinal axis AL.

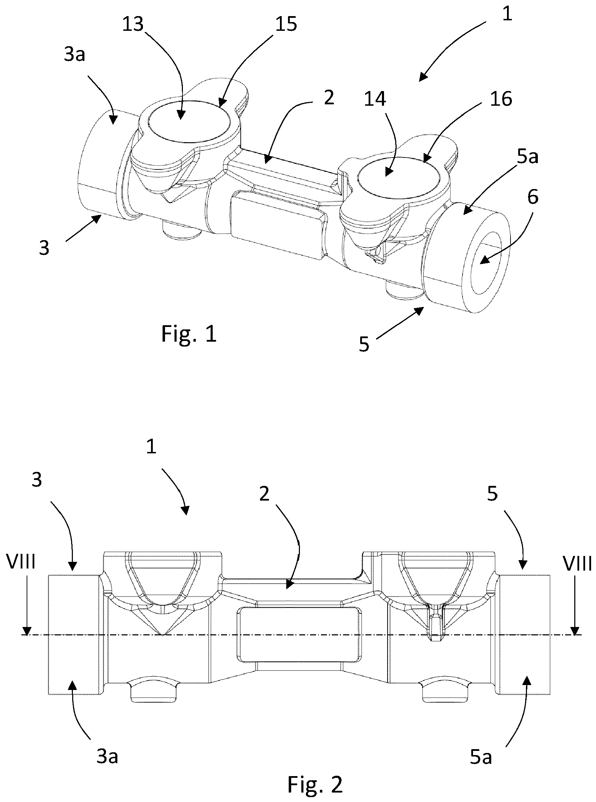

Advantageously, the middle longitudinal axes A15 and A16 of the first and second through seat, respectively, are perpendicular to a plane passing through the middle longitudinal axis AL of the duct 7, such as for example the plane VIII-VIII in Figure 2.

Preferably, the first and second through seat are both arranged on the same side with respect to a plane passing through the middle longitudinal axis AL of the duct 7, such as for example the plane VIII-VIII in Figure 2. Advantageously, the distance La between the middle longitudinal axes A15 and A16 of the first through seat 15 and the second through seat 16 respectively is comprised between 30-120 mm, preferably equal to 60 mm. Preferably, the first through seat 15 and the second through seat 16 are obtained at the first section 8 and the fifth section 12 of the duct 7, respectively. Advantageously, the first through seat 15 and the second through seat 16 lie on opposite sides with respect to a middle plane PM of the duct 7, perpendicular to the middle longitudinal axis AL and equidistant from the inlet opening 4 and the outlet opening 6. Advantageously, the first through seat 15 and the second through seat 16 each comprise an inlet section 15a, 16a, facing away from the duct 7, and an outlet section 15b, 16b, facing towards the duct 7, substantially cylindrical and of different diameters, so that said first through seat 15 and second through seat 16 show, in a section operated according to a plane, such as, for example, the plane IV-IV of Figure 3, passing through the middle longitudinal axis AL of the duct 7 and through the middle longitudinal axes A15 and A16 of the first and second through seat, a section substantially T-shaped.

Advantageously, the inlet sections 15a and 16a have a diameter comprised between 6-41 mm, preferably equal to 21 mm.

Advantageously, the outlet sections 15b and 16b have a diameter Dt comprised between 5-40 mm, preferably equal to 16.75 mm.

Advantageously, the first ultrasonic transducer 13 and the second ultrasonic transducer 14 are shaped in such a way as to be positioned inside the first through seat 15 and the second through seat 16, respectively, and hermetically close the same, possibly with interposition of special gaskets (for example of the so-called "O-ring" type), not represented in the attached figures; once the first ultrasonic transducer 13 and the second ultrasonic transducer 14 are positioned and fixed, the water present in the duct 7 are thus not able to exit from the first through seat 15 and the second through seat 16.

Advantageously, the reflective means comprise a reflective element 22, in turn comprising a reflective body 17 provided with a reflective front face 18, configured to receive and reflect an ultrasonic wave, and with a rear face 19, positioned posteriorly to the reflective front face 18, so that it is not hit by an ultrasonic wave incident on the reflective front face 18; the reflective front face 18 and the rear face 19 are connected to each other by a side wall 20. Advantageously, the reflective front face 18 of the reflective body 17 lies in a lying plane Pg. Preferably, the reflective front face 18 of the reflective body 17 has, in a projection onto its laying plane Pg, a substantially elliptical profile, the major axis of which preferably has a length comprised between 6-30 mm, more preferably equal to 10.58 mm, and the minor axis of which preferably has a length comprised between 3-27 mm, more preferably equal to 7.54 mm. Advantageously, the reflective front face 18 of the reflective body 17 is substantially flat, and lies in the lying plane Pg.

Advantageously, the rear face 19 of the reflective body 18 lies in a lying plane substantially parallel and spaced from the plane Pg of the reflective front face 18.

Advantageously, the rear face 19 of the reflective body 17 has, in a projection onto the laying plane Pg, a substantially elliptical profile, preferably the same as that of the reflective front face 18.

Advantageously, the rear face 19 of the reflective body 17 is substantially flat.

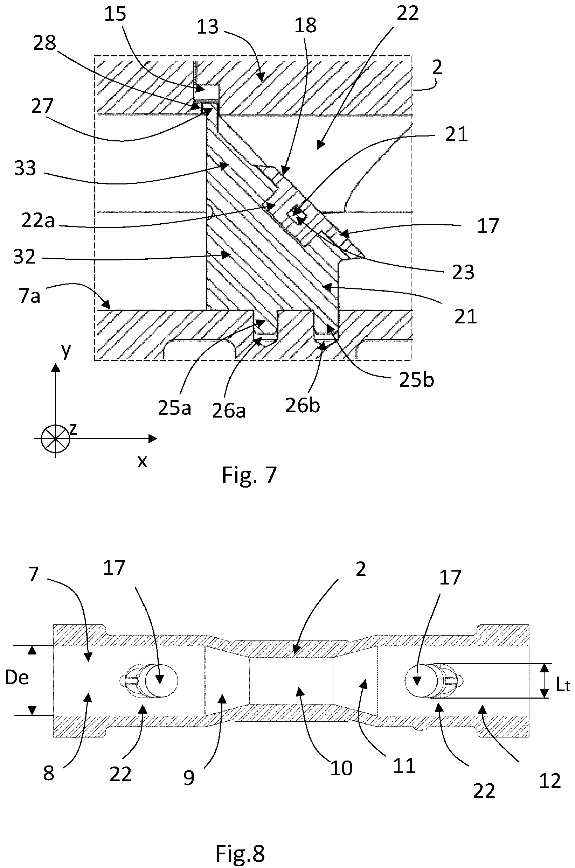

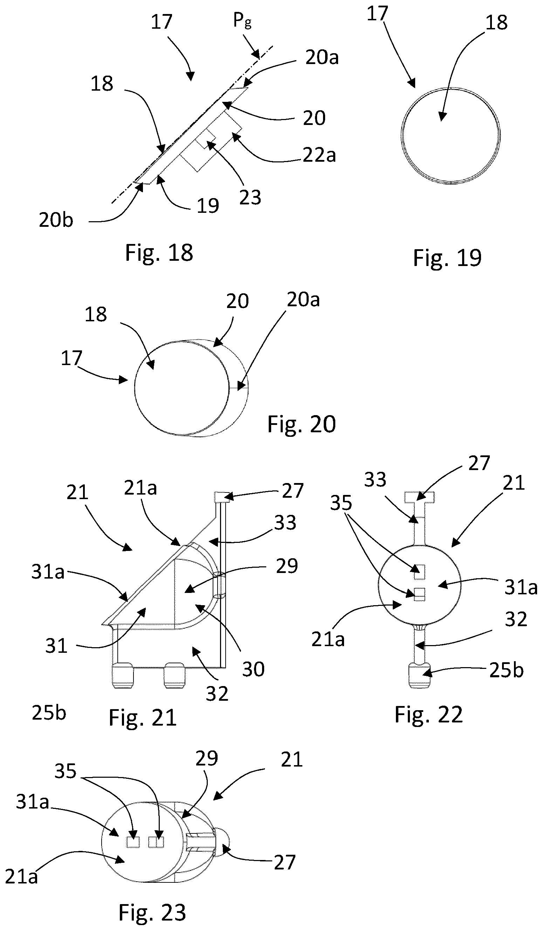

Advantageously, the reflective front face 18 and the rear reflective face 19 are arranged offset from each other in a direction perpendicular to the lying plane Pg, in such a way that the side surface 20 connecting them is not perpendicular to the lying plane Pg at least in a first section 20a thereof and in a second section 20b thereof (illustrated for example in Figure 18). Advantageously, the reflective body 17 is shaped in such a way that, once positioned within the duct 7, its maximum overall dimension Lt in the direction transverse to the duct 7 (indicated for example in Figure 8), i.e. in the direction perpendicular to the middle longitudinal axis AL of the duct 7 is comprised between 6-30 mm, preferably equal to 8.5 mm.

Advantageously, the reflective body 17 is shaped in such a way that, once positioned within the duct 7, the first and second section 20a, 20b of its side wall 20 result, in a section operated according to a plane, such as, for example, the plane IV-IV of Figure 3, passing through the middle longitudinal axis AL and through the middle longitudinal axes A15 and A16 of the first and second through seat, substantially parallel to the middle longitudinal axis AL.

The reflective means further comprise a support 21, attached to the rear face 19 of the reflective body 17 and to the inner surface 7a of the duct 7 obtained in the tubular body 2, configured to hold the reflective body 17 in a predetermined position within said duct 7. In an advantageous embodiment, the support 21 comprises a central portion 29, preferably shaped like an ogive, more preferably comprising a first region 30, advantageously having a substantially hemispherical or dome-shaped conformation with a circular base, provided with an end 30a, preferably protruding with respect to the rest of the surface of the first region 30 like a "nose", arranged to be directed, in use, towards the inlet opening 4 or towards the outlet opening 6; from the base, advantageously circular, of the first region 30 a second region 31 departs, preferably shaped like a sectioned cylinder with a plane inclined with respect to a base thereof, to define an inclined base 31a, substantially counter-shaped to the rear face 19 of the reflective body 17, and to which the latter is fixed or fixable.

Advantageously, the first region 30 has a base diameter Do comprised between 5-40 mm, preferably equal to 8 mm. Advantageously, the distance Lo (shown for example in Figure 9) between the end 30a of the first region 30 and the midpoint of the reflective front face 18 is comprised between 5-30 mm, preferably equal to 9.4 mm. Preferably, the central portion 29 is obtained by moulding, more preferably by injection; preferably, in this case, the injection point is positioned at the end 30a of the first region 30.

Advantageously, the support 21 comprises a first spacer element 32, which departs from the central portion 29, configured to be arranged, in use, close to the inner surface 7a of the duct 7.

Advantageously, the first spacer element 32 is fin-shaped and is configured to be arranged, in use, within the duct 7, parallel to a plane passing through the middle longitudinal axis AL, and more preferably also passing through the middle longitudinal axes A15 and A16 respectively of the first through seat 15 and of the second through seat 16, such as for example the plane IV-IV of Figure 3.

Advantageously, the support 21 comprises a second spacer element 33, which departs from the central portion 29, advantageously on the side opposite the first spacer element 32, configured to be arranged, in use, close to the inner surface 7a of the duct 7 and/or of the inner surface of the first through seat 15 or of the second through seat 16.

Advantageously, the second spacer element 33 is fin-shaped, preferably with a triangular side shape, and is configured to be arranged, in use, within the duct 7, parallel to a plane passing through the middle longitudinal axis AL, and more preferably also passing through the middle longitudinal axes A15 and A16 of the first through seat 15 and the second through seat 16, respectively, such as for example the plane IV-IV of Figure 3.

Advantageously, the second spacer element 33 is parallel and aligned with the first spacer element 32. Advantageously, the support 21 comprises fixing means for fixing to the inner surface 7a of the duct 7; advantageously such fixing means may comprise one or more first fixing pins 25a, 25b, configured to be fixed, for example by mechanical interference, or thermal deformation, or bonding, in one or more corresponding first fixing seats 26a, 26b obtained in the side wall 7a, advantageously perpendicularly thereto, so as to fix, cantilevered, the support 21 to the side wall 7a. Advantageously, the first fixing pins 25a, 25b depart from the first spacer element 32.

Preferably, the first fixing seats 26a and 26b are aligned with each other in the direction of the middle longitudinal axis AL, and are preferably obtained at a plane passing through the middle longitudinal axis AL, and more preferably also passing through the middle longitudinal axes A15 and A16 of the first through seat 15 and the second through seat 16, respectively, such as for example the plane IV-IV of Figure 3. Advantageously, the fixing means are configured to keep the support 21 fixed within the duct 7 in such a position that the reflective front face 18 of the reflective body 17 is facing one of the first ultrasonic transducer 13 and the second ultrasonic transducer 14, and inclined with respect thereto.

More preferably, the fixing means are configured to keep the support 21 fixed within the duct 7 in such a position that the reflective front face 18 of the reflective body 17 results facing one of the first through seat 15 and the second through seat 16, and inclined with respect thereto, and in such a way that, in a projection onto a plane perpendicular to the middle longitudinal axes A15 and A16 of the first and second through seats, respectively, the reflective front face 18 is substantially circular, and centred on the middle longitudinal axis, A15 or A16, of said first through seat 15 or second through seat 16, respectively.

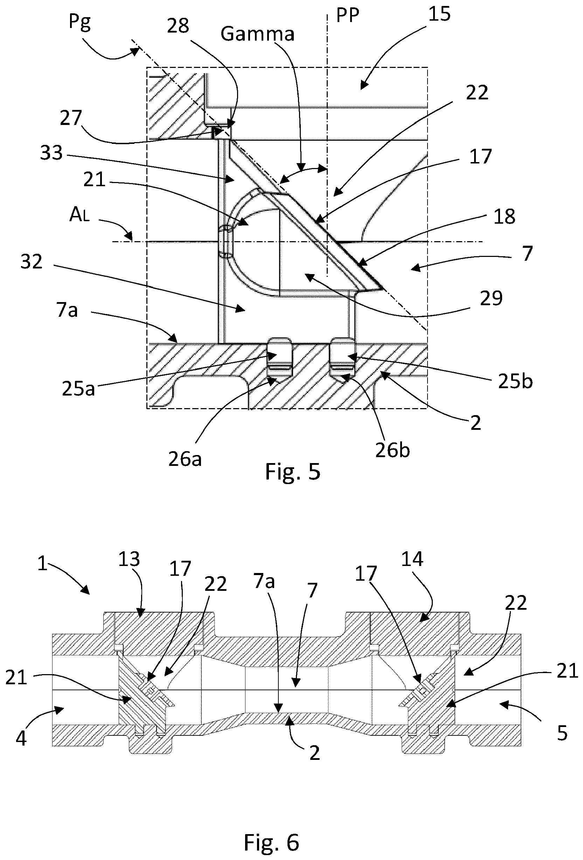

Even more preferably, the fixing means are configured to keep the support 21 fixed within the duct 7 in such a position that the reflective front face 18 of the reflective body 17 is positioned with its lying plane Pg inclined, with respect to a plane PP perpendicular to the middle longitudinal axis AL, by a gamma angle (indicated for example in Figure 5) comprised between 35° and 60°, preferably equal to 45°.

Advantageously, the fixing means are configured to keep the support 21 fixed within the duct 7 in such a position that the axis Ao of the first region 30 of the central portion 29 of the support 21, passing through the end 30a of said first region 30, results parallel to the middle longitudinal axis of the first section 8 (preferably coinciding, like in the advantageous examples illustrated in the attached figures, with the middle longitudinal axis AL), and spaced from the same by a distance DaxO, preferably less than 10 mm; in the table of Figure 10, this distance DaxO is indicated comprised between -10 mm and + 10 mm, considering the middle longitudinal axis of the first section 8 as the measurement origin.

Preferably, this distance DaxO is zero, and therefore the axis Ao coincides with the middle longitudinal axis of the first section 8, and therefore, preferably, with the middle longitudinal axis AL.

Advantageously, the fixing means are configured to keep the support 21 fixed within the duct 7 in such a position that the axis Ao of the first region 30 of the central portion 29 of the support 21, passing through the end 30a of said first region 30, results parallel to the middle longitudinal axis of the third section 10 (preferably coinciding, like in the advantageous examples illustrated in the attached figures, with the middle longitudinal axis AL), and spaced from the same by a distance DaxE, preferably less than 10 mm; in the table of Figure 10, this distance DaxE is indicated comprised between -10 mm and + 10 mm, considering the middle longitudinal axis of the third section 8 as the measurement origin.

Preferably, this distance DaxE is zero and therefore the axis Ao coincides with the middle longitudinal axis of the third section 10, and therefore, preferably, with the middle longitudinal axis AL.

Advantageously, the fixing means may comprise one or more second fixing pins 27, advantageously protruding from the support 21, preferably on the side opposite to the one or more first fixing pins 25a, 25b, and suitable for being inserted and being fixed, for example, in one or more corresponding second seats 28, obtained in the inner surface 7a of the duct 7 and/or in the inner wall of the second through seat 15 or 16; in an advantageous embodiment, such as those illustrated in the attached figures, the one or more second seats 28 may be obtained on the perimeter edge of the outlet section 15b, 16b of the first or second through seat 15 or 16, and they may advantageously be positioned so as to stably bind the one or more second fixing pins 27 to the inner surface 7a of the duct 7 and/or to the inner wall of the first or second through seat 15 or 16, when the first ultrasonic transducer 13 or the second ultrasonic transducer 14 are inserted and fixed in the first through seat 15 or the second through seat 16, respectively. Advantageously, the one or more second fixing pins 27 depart from the second spacer element 33.

As will be further explained below, the ultrasonic measuring device 1 comprises one or more appendices protruding from the rear face 19 of the reflective body 17 toward the support 21, and inserted within the latter, whose shape and/or position are such that the set of said one or more appendices inserted in the support 21 opposes the removal of the reflective body 17 from the support 21 along three directions two by two orthogonal to each other, such as, for example, the three directions indicated in Figures 7, 25 and 27 by the three axes "x", "y" and "z".

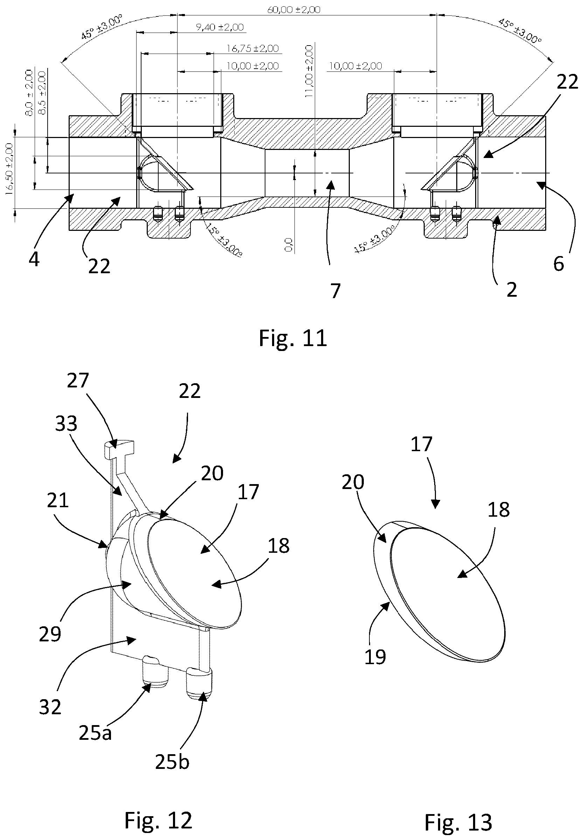

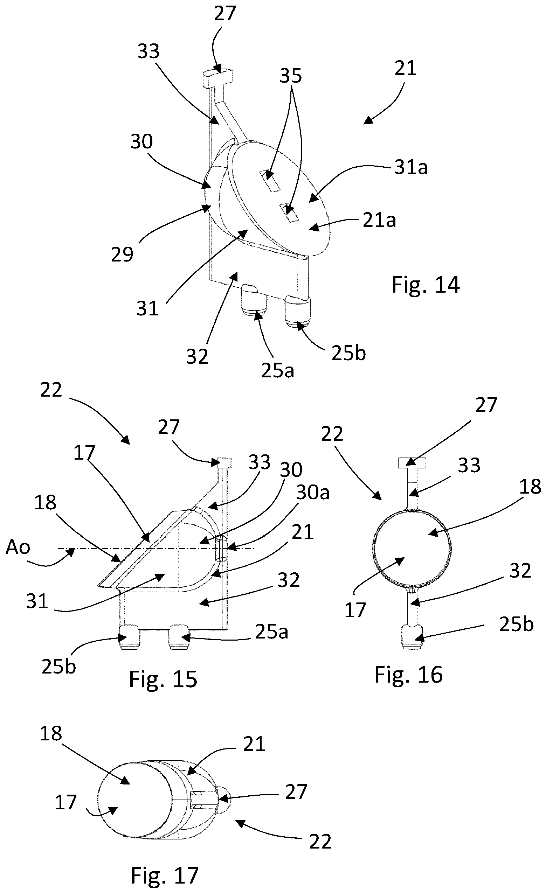

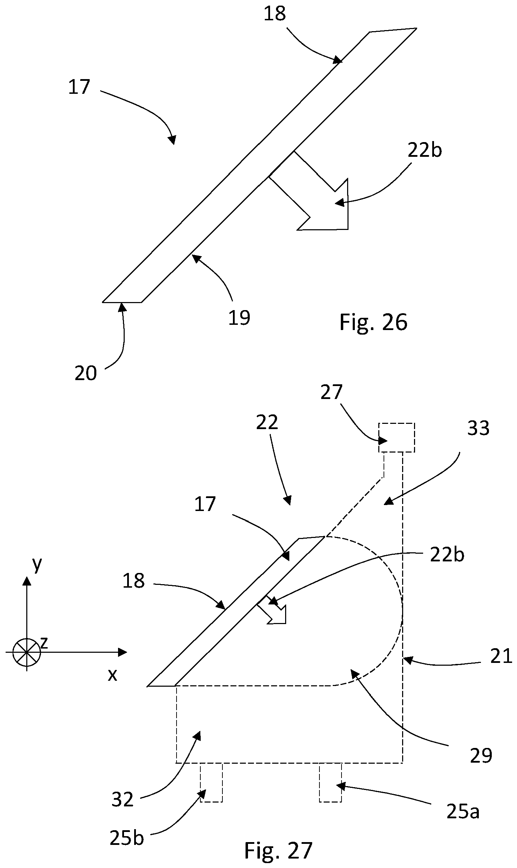

In a first advantageous embodiment, such as, for example, the one illustrated in Figures 6, 7, 12-23, and the one illustrated in Figures 26 and 27, said one or more appendices comprise a single appendix, indicated by number 22a in the example illustrated in Figures 6, 7, 12-23, and by number 22b in the example illustrated in Figures 26 and 27; in this case, the set of the one or more appendices consists of said single appendix 22a or 22b.

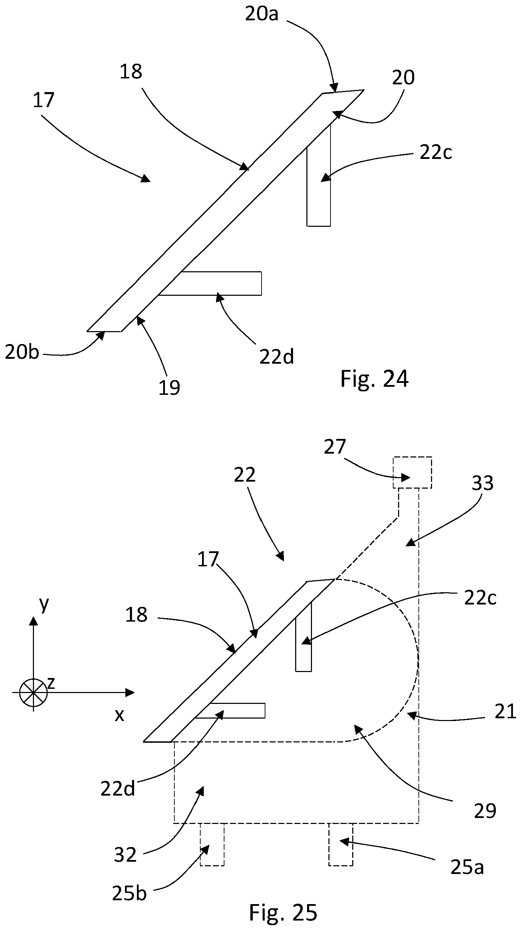

In a further advantageous embodiment, such as the one illustrated in Figures 24 and 25, the one or more appendices comprise a plurality of appendices, for example two appendices 22c and 22d.

Advantageously, the one or more appendices are made as one piece with the reflective body 17.

Advantageously, the reflective body 17 may be made of metal, such as brass or stainless steel, or of a plastic material (or combination of plastics), such as polycarbonate (PC), polyamide 66 (PA66), polyparaphenylene sulfide (PPS), polyether ether ketone (PEEK), possibly loaded with glass or carbon fibre, preferably up to 80% by weight.

In a preferred embodiment, the reflective body 17, and the one or more appendices, are obtained by moulding, preferably injection moulding, more preferably of a metallic material; in an advantageous embodiment, the reflective body 17, and the one or more appendices, are obtained by injection moulding of metal powder, which is subsequently sintered; this moulding technology is called "MIM" (an acronym for the expression "Metal Injection Molding").

Advantageously, the support 21 may be made of metal, for example brass or stainless steel, or of a plastic material (or combination of plastics), such as, for example, polycarbonate (PC), polyamide 66 (PA66), polyparaphenylene sulfide (PPS), polyether ether ketone (PEEK), possibly loaded with glass or carbon fibre, preferably up to a maximum of 60% by weight.

In a preferred embodiment, the support 21 is obtained by moulding, and is advantageously overmoulded to the rear surface 19 of the reflective body 17 after the latter has already been manufactured. In a further advantageous embodiment, the reflective body 17 is overmoulded onto the support 21 after the latter has already been manufactured.

Advantageously, whether the support 21 is overmoulded on the rear face 19 of the reflective body 17, or whether the reflective body 17 is overmoulded on the support 21, the one or more appendices 22a, 22b, 22c, 22d protruding from the rear face 19 of the reflective body 17 may advantageously be inserted into the support 21 during overmoulding.

In an advantageous embodiment, for example the one illustrated in Figures 6, 7, 12-23, the one or more appendices (i.e. the single appendix 22a in the example considered) have a hole 23, preferably a through hole, into which a portion of the support 21 is inserted; in the advantageous case in which the support 21 is overmoulded on the reflective body 17, during the moulding of the support 21, the material composing it, in its liquid state, enters the hole 23, and remains trapped therein when it solidifies, in such a way as to stably bind the appendix (22a in this case) to the support 21; the set of the one or more appendices, which in this case corresponds to the single appendix 22a, is thus permanently incorporated in the support 21, and in particular in the material composing it, making it impossible (unless it is broken) to separate and remove the reflective body 17 from the support 21 along any direction, and therefore along three directions x, y and z, two by two perpendicular to each other.

In an advantageous embodiment, such as the one illustrated in Figures 24 and 25, the one or more appendices comprise a first appendix 22c and a second appendix 22d having conformation and/or positioning such that they collectively oppose the separation of the reflective body 17 from the support 21 along three directions two by two perpendicular to each other.

For example, with reference to the advantageous embodiment illustrated in Figures 24 and 25, the first appendix 22c, once inserted inside the support 21, for example by overmoulding it onto the rear face 19 of the reflective body 17, opposes the separation of the reflective body 17 from the support 21 (with reference to the drawing table in which said figures are shown) at least in the horizontal direction (i.e. along the axis x of Figure 25) and in a direction perpendicular to the sheet (i.e. along the axis z of Figure 25), while it does not oppose the separation of the reflective body 17 from the support 21 in the vertical direction (i.e. along the axis y of Figure 25); the second appendix 22d, once inserted inside the support 21, for example by overmoulding it onto the rear face 19 of the reflective body 17, opposes instead the separation of the reflective body 17 from the support 21 (with reference to the drawing table in which said figures are shown) in the vertical direction (i.e. along the axis y of Figure 25, which is perpendicular to both the axis x and the axis z), and furthermore in a direction perpendicular to the sheet (i.e. along the axis z of Figure 25), whereas it does not oppose the separation of the reflective body 17 from the support 21 in the horizontal direction (i.e. along the axis x of Figure 25)). The combined effect of the first appendix 22c and of the second appendix 22d, i.e. the effect of their set, once inserted within the support 21, for example by overmoulding it onto the rear face 19 of the reflective body 17, is thus to prevent the separation of the reflective body 17 from the support 21 along the three directions x, y and z of Figure 25, and thus de facto along any direction.

In a further advantageous embodiment, the one or more appendices comprise an appendix shaped like an arrow, or a mushroom, or a T, or a dovetail, or more generally shaped so as to define, with respect to the rear face 19 of the reflective body 17, an undercut opposing the separation of the reflective body 17 from the support 21 along three directions x, y, z two by two orthogonal to each other.

For example, in the advantageous embodiment illustrated in Figure 26, there is a single arrow-shaped appendix 22b, the tip of which defines, with respect to the rear surface 19, an undercut which, once the appendix 22b is incorporated within the support 21, for example by overmoulding it onto the rear face 19 of the reflective body 17, opposes the separation of the reflective body 17 from the support 21 along the three directions x, y and z.

In an advantageous embodiment, the support 21 comprises, on a coupling surface 21a thereof facing towards the reflective body 17, one or more seats 35, configured to respectively accommodate the one or more appendices; the one or more appendices are configured to allow their insertion into said one or more seat 35 respectively, and prevent their subsequent removal therefrom.

In an advantageous embodiment, such as for example the one illustrated in Figures 6, 7 and 12-23, the coupling surface 21a coincides with the inclined base 31a, and the one or more seats 35 are obtained on said inclined base 31a.

In an advantageous embodiment, the one or more appendices may be inserted into the respective one or more seats by overmoulding the reflective body 17 and the respective one or more appendices onto the support 21, or by overmoulding the support 21 onto the reflective body 17 and the respective one or more appendices, in which case said one or more seats 35 are formed around the respective one or more appendices during the moulding process.

In a further advantageous embodiment, the support 21 and the reflective body 17 can be made autonomously, and then the reflective body 17 can be fixed to the support 21 by inserting, for example by pressure, the one or more appendices thereof (which are advantageously shaped in such a way as to define, with respect to the rear face 19 of the reflective body 17, an undercut opposing the separation of the reflective body 17 from the support 21 along three directions x, y, z two by two orthogonal to each other), in the respective one or more seats 35 of the support 21; in this advantageous case, the one or more appendices and/or the edge of the seats 35 are advantageously elastically deformable, so as to allow the one or more appendices to enter the respective one or more seats 35 by elastic deformation of the one or more appendices and/or the one or more seats 35. The undercut ensures that, once inserted, the one or more appendices can no longer exit from their one or more respective seats 35, thereby preventing the separation of the reflective body 17 from the support 21 in any direction.

Other configurations for the one or more appendices are also possible.

In an advantageous embodiment, such as, for example, in the one illustrated in the attached figures, the ultrasonic measuring device 1 advantageously comprises two reflective elements 22, arranged within the duct 7 and positioned in such a way that the respective reflective body 17 reflects an ultrasonic wave coming from one of the first ultrasonic transducer 13 or the second ultrasonic transducer 14, respectively, towards the reflective body 17 of the other reflective element 22, and vice versa; in this way, an ultrasonic wave generated by the first ultrasonic transducer 13 strikes on the reflective body 17 of one of the two reflective elements 22, is reflected towards the reflective body 17 of the other reflective element 22, and from the latter is reflected towards the second ultrasonic transducer 14, which receives it. Similarly, an ultrasonic wave generated by the second ultrasonic transducer 14 strikes on the reflective body 17 of one of the two reflective elements 22, is reflected towards the reflective body 17 of the other reflective element 22, and from the latter is reflected towards the first ultrasonic transducer 13, which receives it.

The ultrasonic measuring device 1 advantageously comprises a logic unit, for example a microcontroller, or an electronic board, not illustrated, configured to measure the time it takes for an ultrasonic wave to pass from the means of transmission to the means of reception. For example, said logic unit may advantageously be operationally connected to the first ultrasonic transducer 13 and to the second ultrasonic transducer 14, and configured to measure the time elapsing between the transmission of an ultrasonic wave from the first ultrasonic transducer 13 to the reception thereof by the second ultrasonic transducer 14, and the time elapsing between the transmission of an ultrasonic wave from the second ultrasonic transducer 14 to the reception thereof by the first ultrasonic transducer 13; advantageously, the logic unit is configured to determine the difference between these times and to derive from this difference the speed of the water flowing in the duct 7. Preferably, the logic unit is configured to calculate, from the speed of the water, its flow rate, and from this flow rate, the amount of water that has passed in the duct 7 in a predetermined time interval.

Advantageously, the two reflective elements 22 are positioned in such a way as to turn the first region 30 of the supports 21 thereof, one towards the inlet opening 4, and the other one towards the outlet opening 6.

The particular shape of the first region 30 (e.g. hemispherical or dome-shaped with a circular base, with a possible end 30a, preferably protruding from the rest of the surface of the first region 30 shaped like a "nose") favours the flow of water, reducing turbulences and pressure losses.

Advantageously, the two reflective elements 22 are arranged one within the first section 8 of the duct 7, and the other within the fifth section 12 of the duct 7. Advantageously, the two reflective elements 22 are arranged within the duct 7 with the reflective faces 18 of the respective reflective bodies positioned with their middle longitudinal axis (corresponding, in the advantageous embodiment in which the reflective front face 18 shows, in a projection onto its laying plane Pg, a substantially elliptical profile, to the major axis of the ellipse) on a plane, such as, for example, the plane IV-IV of Figure 3, passing through the middle longitudinal axis AL of the duct 7 and through the middle longitudinal axes A15 and A16 of the first and second through seat 15 and 16.

Advantageously, one of the two reflective elements 22 is positioned in proximity to the first through seat 15, such that an ultrasonic wave coming out from the first ultrasonic transducer 13 contained in the first through seat 15 strikes on the reflective front face 18 of said reflective element 22, being reflected towards the reflective front face 18 of the other reflective element 22.

Similarly, the other reflective element 22 is advantageously positioned in proximity to the second through seat 16, such that an ultrasonic wave coming out from the second ultrasonic transducer 14 contained in the second through seat 16 strikes on the reflective front face 18 of said reflective element 22, being reflected towards the reflective front face 18 of the other reflective element 22.

Advantageously, the reflective front face 18 of the reflective element 22 positioned in proximity to the first through seat 15 lies on a lying plane Pg inclined (counterclockwise with reference, for example, to the embodiment example of Figure 9), with respect to a plane PP perpendicular to the middle longitudinal axis AL, by a gammaIN angle comprised between 35° and 60°, preferably equal to 45°.

Advantageously, the reflective front face 18 of the reflective element 22 positioned in proximity to the second through seat 16 lies on a lying plane Pg inclined (clockwise with reference, for example, to the embodiment example of Figure 9), with respect to a plane PP perpendicular to the middle longitudinal axis AL, by a gammaOUT angle comprised between 35° and 60°, preferably equal to 45°.

The positioning of the reflective elements 22 in proximity to the first and second through seat, respectively, also makes it possible to simplify the mounting of the reflective elements 22 in the duct 7; in fact, these reflective elements 22 can be inserted in the duct 7 through the respective first or second through seat, until the respective first fixing pins 25a, 25b are inserted into the respective fixing seats 26a, 26b, and the second fixing pins 27 into the respective second fixing seats 28. The insertion can also be easily done automatically, for example by an automatic machine and/or a robot.

Advantageously, the reflective elements 22 can then be stably fixed in the duct 7, advantageously by inserting the first and second ultrasonic transducer into the respective first or second through seat, thereby stably locking the second fixing pins 27 into the respective second fixing seats 28.

In a preferred embodiment, such as the one illustrated in the attached figures, the reflective element 22 positioned in proximity to the first through seat 15 is arranged such that the centre of its reflective front face 18 shows a distance Lalfa, in the direction of the middle longitudinal axis AL of the duct 7, from the major base 9a of the second section 9 of the duct 7, comprised between 5-60 mm, preferably equal to 10 mm.

In a preferred embodiment, such as the one illustrated in the attached figures, the reflective element 22 positioned in proximity to the second through seat 16 is arranged such that the centre of its reflective front face 18 shows a distance Lbeta, in the direction of the middle longitudinal axis AL of the duct 7, from the major base 11a of the fourth section 11 of the duct 7, comprised between 5-60 mm, preferably equal to 10 mm. The ultrasonic measuring device 1 may advantageously comprise one or more temperature probes, not illustrated, configured to measure the temperature of the water, and operationally connected to the logic unit, which in this case may advantageously be configured to derive the consumption of calories associated with the consumption of the water flowing in the duct 7.

The operation of the ultrasonic measuring device 1 according to the invention is as follows.

During the passage of water from the inlet opening 4 to the outlet opening 6 through the duct 7, the first ultrasonic transducer 13 emits an ultrasonic wave, which strikes on the reflective front face 18 of the reflective body 17 positioned in proximity to the first through seat 15, being reflected towards the reflective front face 18 of the reflective body 17 positioned in proximity to the second through seat 16, and from the latter towards the second ultrasonic transducer 14, which receives it.

At the same time, the second ultrasonic transducer 14 emits an ultrasonic wave, which strikes on the reflective front face 18 of the reflective body 17 positioned in proximity to the second through seat 16, being reflected towards the reflective front face 18 of the reflective body 17 positioned in proximity to the first through seat 15, and from the latter towards the first ultrasonic transducer 13, which receives it.

The two ultrasonic waves pass through the flow of water flowing in the duct 7, the one in the direction of the stream (which runs from the inlet opening 4 to the outlet opening 6), and the other one in the opposite direction to the stream; it follows that the two times the two ultrasonic waves take to pass from the ultrasonic transducer that generates them to the one that receives them are different; the logic unit is configured to calculate the difference of these times, and from this difference to derive the speed of the water in the region comprised between the reflective front faces 18 of the two reflective elements 22.

Knowing the section of duct 7 (advantageously in the various sections 8-12), the logic unit calculates the water flow rate, and from this its consumption in a desired time interval.

In case the ultrasonic measuring device 1 is provided with one or more temperature probes, not illustrated, configured to measure the temperature of the water, and operationally connected to the logic unit, the latter can also be advantageously configured to derive the consumption of calories carried by the water passing in the duct 7 in a given time interval.

It should be noted that the fixing of the reflective body 17 to the support is advantageously made by means of the one or more appendices, so that there is no need for fixing elements that protrude to the side or front of the reflective body 17, and which could cause the disadvantages highlighted in the prior art cited above. From the description provided, the features and advantages of the invention are clear.

In particular, thanks to one or more appendices protruding from the rear face of the reflective body, it is possible to fix the latter firmly to its support without the need to use fixing elements that protrude to the side or front of the reflective body, and which could cause the drawbacks highlighted in the cited prior art. The lack of fixing elements protruding from the side of the reflective body helps to reduce the cross-sectional dimensions of the reflective body, and therefore makes it possible to use a duct with the same dimensions for various types of flow rates, thereby achieving economies of scale in the production, storage and distribution of this device; the lack of fixing elements protruding from the side of the reflective body makes it possible to reduce the pressure drops of the device, and therefore to use it both for high nominal flow rates, e.g. 4000 litres/hour, and for low nominal flow rates, e.g. 2500 litres/hour, of the water to be measured.

It is clear that the ultrasonic measuring device which is the subject matter of the present invention so conceived is susceptible to numerous modifications and variations, all of which are within the scope of the invention; moreover, all details are substitutable by technically equivalent elements. In practice, the materials used, as well as the dimensions thereof, can be of any type according to the technical requirements. Finally, it is emphasized that the particular shape and/or configuration of the tubular body 2, of the duct 7, of the first and second through seat 15 and 16, of the relative first and second transducer 13, 14, of the logic unit, and the particular external geometry and positioning in the duct of the reflective elements 22, described above, may constitute a second independent invention regardless of the presence or absence of the appendices 22a, 22b, 22c, 22d for fixing the reflective body 17 to its support 21.

The above description is therefore also applicable to the second autonomous invention, the only difference being that in the latter the one or more appendices 22a, 22b, 22c, 22d are not necessarily present, and that the reflective body 17 can therefore be fixed to the support 21 even without the presence of the appendices, but, for example, by welding, or bonding. Furthermore, according to this autonomous invention, the reflective body 17 and its support 21 can advantageously be obtained as one body, for example by injection moulding of a plastic material or metal.

In said autonomous invention, the particular shape and/or configuration of the tubular body 2, of the duct 7, of the first and second through seat 15 and 16, of the relative first and second transducer 13, 14, of the logic unit, and the external geometry and positioning in the duct of the reflective elements 22, described above, independently of the presence or absence of the appendices, allows to achieve an optimal distribution of the water inside the duct 7, which enables to carry out an effective measurement, with an error within the allowed limits, both for high nominal flow rates, for example 4000 litres/hour, and for low nominal flow rates, for example 2500 litres/hour, of the water to be measured, keeping the pressure drops low.

## Claims

1. Ultrasonic measuring device (1) of the water and/or of calories consumption, comprising:
- a tubular body (2) wherein a duct (7) configured to the flow of water therein is defined,
- means of generation (13, 14), configured to generate an ultrasonic wave that propagates within said duct (7),
- means of reception (13, 14) suitable for receiving an ultrasonic wave generated by said means of generation (13, 14),
- reflective means (22), arranged within said duct (7), configured to intercept an ultrasonic wave generated by said means of generation (13, 14) and divert it toward said means of reception (13, 14), wherein said reflective means (22) comprise:
- a reflective body (17) provided with a reflective front face (18), configured to receive and reflect an ultrasonic wave, and a rear face (19), positioned posteriorly to said reflective front face (18) so that it is not hit by an ultrasonic wave incident on said reflective front face (18), said reflective front face (18) and said rear face (19) being connected to each other by a side wall (20),
- a support (21), fixed to said rear face (19) of said reflective body (17) and configured to keep said reflective body (17) in a predetermined position within said duct (7),
**characterised by** the fact of comprising one or more appendices (22a, 22b, 22c, 22d), protruding from said rear face (19) of said reflective body (17) toward said support (21) and inserted within the latter, whose shape and/or position are such that the set of said one or more appendices (22a, 22b, 22c, 22d) inserted in said support (21) opposes the removal of said reflective body (17) from said support (21) along three directions (x, y, z) two by two orthogonal to each other.

2. Ultrasonic measuring device (1), as in claim 1, **characterised by** the fact that said support (21) is obtained by overmoulding the same to said rear face (19) of said reflective body (17), and said one or more appendices (22a, 22b, 22c, 22d) are inserted into said support (21) during said overmoulding.

3. Ultrasonic measuring device (1), as in claim 1, **characterised by** the fact that said reflective body (17) is obtained by overmoulding the same to said support (21), and said one or more appendices (22a, 22b, 22c, 22d) are inserted into said support (21) during said overmoulding.

4. Ultrasonic measuring device (1), as in claims 2 or 3, **characterised by** the fact that one appendix (22a) of said one or more appendices (22a, 22b, 22c, 22d) has a hole (23) inside which a portion of said support (21) is inserted.

5. Ultrasonic measuring device (1), as in one or more of previous claims, **characterised by** the fact that said support (21) comprises, on a coupling surface (21a) facing said reflective body (17), one or more seats (35) configured to accommodate said one or more appendices (22a, 22b, 22c, 22d) respectively.

6. Ultrasonic measuring device (1), as in claim 5, **characterised by** the fact that said one or more appendices (22a, 22b, 22c, 22d) are configured to be inserted in said or more seats (35) and not be able to exit from them once inserted.

7. Ultrasonic measuring device (1), as in one or more of previous claims, **characterised by** the fact that said one or more appendices (22a, 22b, 22c, 22d) comprise an appendix (22b) shaped so as to define, with respect to said rear face (19) of said reflective body (17), an undercut that opposes the separation of said reflective body (17) from said support (21) along three directions (x, y, z) two by two orthogonal to each other.

8. Ultrasonic measuring device (1), as in one or more of previous claims, **characterised by** the fact that said one or more appendices (22a, 22b, 22c, 22d) comprise a first appendix (22c), inserted within said support (21) and configured to oppose the separation of said reflective body (17) from said support (21) along at least a first direction (x) and a second direction (z) perpendicular to each other, and a second appendix (22d), inserted within said support (21) and configured to oppose the separation of said reflective body (17) from said support (21) along at least a third direction (y) perpendicular to said first direction (x) and second direction (z).

9. Ultrasonic measuring device (1), as in one or more of previous claims, **characterised by** the fact that said reflective body (17) is obtained by injection moulding of a metallic material.

10. Ultrasonic measuring device (1), as in one or more of previous claims, **characterised by** the fact that said support (21) comprises means for fixing (25a, 25b, 27) to an inner surface (7a) of said duct (7).
